# EUROPEAN PATENT SPECIFICATION

(11) **EP 3 997 377 B1**
(45) Date of publication and mention of the grant of the patent: **25.11.2026**
(21) Application number: 20837888.5
(22) Date of filing: 09.07.2020
(51) Int. Cl.: B60B 33/06, B62B 5/04

(54) **MOVEABLE STAND ASSEMBLY AND METHOD OF USE**
BEWEGLICHE STANDANORDUNG UND VERWENDUNGSVERFAHREN
ENSEMBLE BÉQUILLE MOBILE ET PROCÉDÉ D'UTILISATION

(30) Priority: 09.07.2019 US 201962872104 P
(43) Date of publication of application: 18.05.2022
(73) Proprietor: Brunson Instrument Company, Kansas City, Missouri 64129 (US)
(72) Inventor: GIPSON, Isaac, Kansas City, Missouri 64129 (US); BRUNSON, Deighton, Kansas City, Missouri 64129 (US); MEURET, Mark, Kansas City, Missouri 64129 (US); STACK, Eli, Kansas City, Missouri 64129 (US); WARDEN, Adam, Kansas City, Missouri 64129 (US)
(74) Representative: Herrero & Asociados, S.L.
(86) International application number: PCT/US2020/041435
(87) International publication number: WO 2021/007450

(56) References cited:
- BE-A- 544 909
- JP-A- 2010 076 471
- US-A- 1 007 022
- US-A1- 2005 017 138
- US-A1- 2005 017 138
- US-A1- 2006 103 092
- US-A1- 2009 174 162
- US-A1- 2012 024 329
- US-A1- 2019 064 869
- US-A1- 2019 064 869

## Description

### Cross-Reference to Related Applications

This application claims priority to co-pending U.S. Provisional Patent Application Serial No. 62/872,104, filed July 9, 2019.

### Field of the Invention

The present invention relates generally to movable stand assemblies. More specifically, the present invention is concerned with stand assemblies having improved ground clearance.

### Background

Movable stands of the prior art generally include a base having a plurality of spaced-apart wheels, such as caster wheels or the like. In this way, the stand can be wheeled from place to place, such as across a flat surface (the "ground"). Unfortunately, cords and other low-lying objects can prevent or otherwise hinder such movement. Accordingly, it would be beneficial to have a moveable stand that has sufficient ground clearance to avoid low-lying objects.

Many stands of the prior art include one or more locking feature for moving one or more wheel from an unlocked configuration to a locked configuration, thereby moving the stand from a moveable configuration to a stationary configuration. Unfortunately, the process for locking the wheels can be tedious and unreliable. Furthermore, locked wheels can provide an unstable and/or otherwise unreliable means of retaining the stand in a stationary configuration. For instance, even a locked wheel can be somewhat prone to movement. Furthermore, wheels made of hard materials (such as plastic, metal, and the like) generally provide poor resistance to lateral movement along a support surface (due to a relatively small engagement area associated with the tangential orientation of the support surface to the curvature of the wheel) while softer wheel materials (such as rubber and the like) tend to provide varying levels of vertical support (due to compression of such material at the engagement area, thereby changing the surface area of the engagement area). Accordingly, it would be beneficial to have a stand that is moveable to a stationary configuration without requiring the wheels to be locked.

Many stands of the prior art include one or more feature for disengaging one or more wheel from the ground, thereby moving the stand from a moveable configuration to a stationary configuration. Unfortunately, existing systems fail to provide a satisfactory solution for wheel disengagement while maintaining desirable ground clearance. Accordingly, it would be beneficial to have a system that provides a satisfactory solution for wheel disengagement while maintaining desirable ground clearance. Document US 2019/0064869 A1 shows a wheeled foot pedal assembly.

### Summary

The present invention is defined in the claims and comprises a moveable stand that has sufficient ground clearance to avoid low-lying objects. When required or desired, the stand of the present invention is moveable to a stationary configuration without requiring the wheels to be locked. In so doing, the present invention provides a satisfactory solution for wheel disengagement while maintaining desirable ground clearance.

Certain embodiments include a wheel assembly that moves relative to a respective trivet post, thereby moving the wheel assembly between a deployed configuration and a stowed configuration. When the wheel assembly is in the stowed configuration, a distal end of the trivet post is engaged with the floor, thereby allowing the wheel to be disengaged from the floor and/or minimizing the effects of the wheels engagement with the same. When the wheel assembly is in the deployed configuration, the distal end of the trivet post is positioned relative to the wheel assembly such that wheel(s) of the wheel assembly prevent, or otherwise inhibit, the distal end of the trivet post from engaging with objects on the floor.

There is also provided a method of moving a stand from a stationary configuration to a moveable configuration. The method comprises moving a wheel relative to the respective trivet post, such that the trivet post disengages from a horizontal surface and the wheel can freely rotate along the horizontal surface. According to an embodiment, the method further includes causing trivet posts of the stand assembly to disengage from the floor and further includes causing a distal end of each trivet post to be positioned between wheels of a respective wheel assembly such that each wheel assembly prevents or otherwise hinders engagement of its respective trivet post with objects on the floor. In this way, necessary or desired ground clearance for moving the stand assembly along the floor is obtained with minimal adjustments of the stand assembly being required for obtaining such ground clearance.

There is also provided a method for leveling a stand while in the stationary configuration by adjusting the position of one or more trivet posts relative to the wheel assembly such that the trivet posts form a trivet.

The foregoing and other objects are intended to be illustrative of the invention and are not meant in a limiting sense. Many possible embodiments of the invention may be made and will be readily evident upon a study of the following specification and accompanying drawings comprising a part thereof. Various features and subcombinations of invention may be employed without reference to other features and subcombinations. Other objects and advantages of this invention will become apparent from the following description taken in connection with the accompanying drawings, wherein is set forth by way of illustration and example, an embodiment of this invention and various features thereof. The invention is defined by the claims.

### Brief Description of the Drawings

Preferred embodiments of the invention are set forth in the following description and are shown in the drawings and are particularly and distinctly pointed out and set forth in the appended claims.
Fig. 1 is an isometric view of a stand assembly of the present invention.
Fig. 2 is an isometric view of a portion of the stand assembly, the stand assembly shown with the vertical stanchion and the brace members being removed for clarity and the base being outlined in broken lines shown in a transparent state.
Fig. 3 is a sectional view of the portion of the stand assembly shown in Fig. 2, the wheel assembly and the trivet post being shown in a stowed configuration and a deployed configuration, respectively.
Fig. 4 is a partial view of the sectional view of Fig. 3 shown on an enlarged scale, the wheel assembly and the trivet post being shown in a deployed configuration and a stowed configuration, respectively.
Fig. 5 is a partial isometric view of the stand assembly of Fig. 1, showing a latch assembly in an engaged configuration.
Fig. 6 is a partial side view of the stand assembly of Fig. 1, showing the latch assembly in an engaged configuration.
Fig. 7 is a partial side view of the stand assembly of Fig. 1, showing the latch assembly in a disengaged configuration.
Fig. 8 is a sectional view of the portion of the stand assembly shown in Fig. 2, the wheel assembly and the trivet post being shown in a deployed configuration and a stowed configuration, respectively, showing the leveling crank and handle, and without showing pedal assembly on obverse side.
Fig. 9 is a partial view of the sectional view of Fig. 8 shown on an enlarged scale, the wheel assembly and the trivet post being shown in a deployed configuration and a stowed configuration, respectively, showing the leveling crank and handle.
Fig. 10 is a partial view of the sectional view of Fig. 9 shown on an enlarged scale, the wheel assembly and the trivet post being shown in a stowed configuration and a deployed configuration, respectively.

### Detailed Description

As required, a detailed embodiment of the present invention is disclosed herein; however, it is to be understood that the disclosed embodiment is merely exemplary of the principles of the invention, which may be embodied in various forms. Therefore, specific structural and functional details disclosed herein are not to be interpreted as limiting, but merely as a representative basis for teaching one skilled in the art to variously employ the present invention in virtually any appropriately detailed structure.

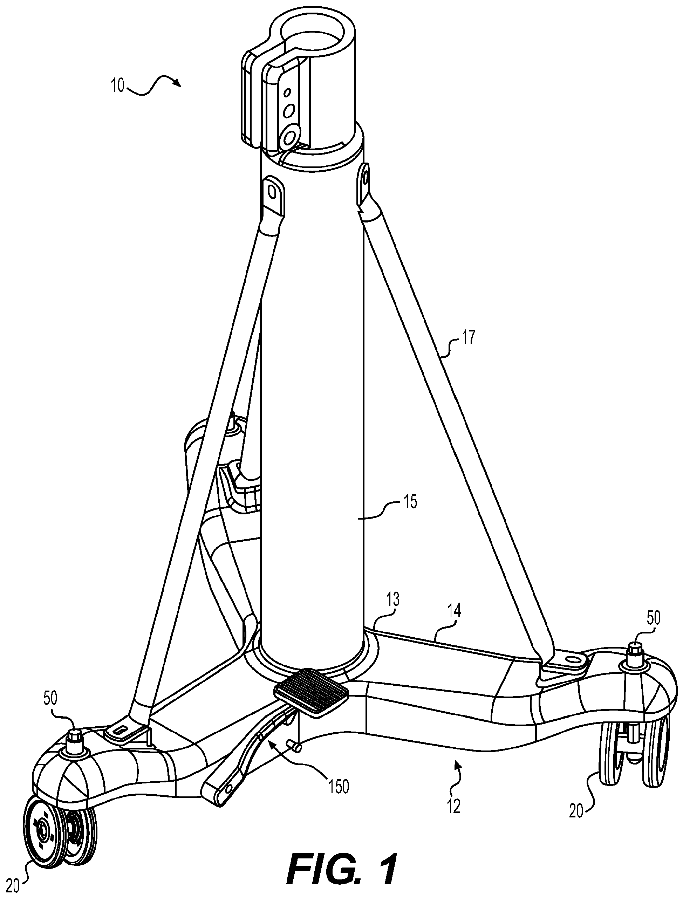

Referring to Fig. 1, there is provided a stand assembly 10 having a base 12 and a vertical stanchion 15 extending vertically therefrom. In the embodiment shown, the base 12 includes a center hub 13 and three equally-spaced base arms 14 extending therefrom. In some embodiments, the stand assembly has more than 3 radially symmetrically-spaced base arms 14. Each base arm 14 includes a respective proximal end secured to the center hub 13 and a respective distal end displaced generally horizontally therefrom, while the vertical stanchion 15 includes a proximal end secured to the center hub 13 of the base 12 and a distal end displaced vertically therefrom. In this way, the stand assembly provides a stable means of supporting objects above a surface (the "floor").

In some embodiments, the stand assembly includes one or more brace member 17 such as the diagonal braces 17 shown in Fig. 1. In the embodiment shown, each brace member 17 includes opposed first and second ends, the first end of each brace member 17 being coupled to the vertical stanchion 15 and the second end of each brace member being coupled to a respective base arm 14. In this way, the brace members 17 increase rigidity of the stand assembly 10. In some embodiments, each base arm 14 defines a respective engagement feature for facilitating securement of a respective brace member 17 to the same. In some embodiments, the engagement feature is a platform (shown in Fig. 1), or a recessed area (shown in U.S. Design Application No. 29/677,944).

Still referring to Fig. 1, the stand assembly 10 of the present invention includes a plurality of wheel assemblies 20 and a plurality of corresponding trivet posts 50. In some embodiments, a wheel assembly 20 is positioned at or near a distal end of each base arm 14. In some such embodiments, one or more base arm 14 includes a raised portion, such as a raised "clawfoot" distal end. In this way, the base 12 is configured to accommodate wheel assemblies having large wheel diameters (such as, *e*.*g*., 12,7 cm (5 inches) or more) while maintaining an overall height for the base 12 (as measured at the center hub 13 or similar region) that is similar to (or even lower than) an overall height of traditional bases associated with wheel assemblies having smaller wheel diameters (such as, *e*.*g*., 6,35 cm (2,5 inches) or less).

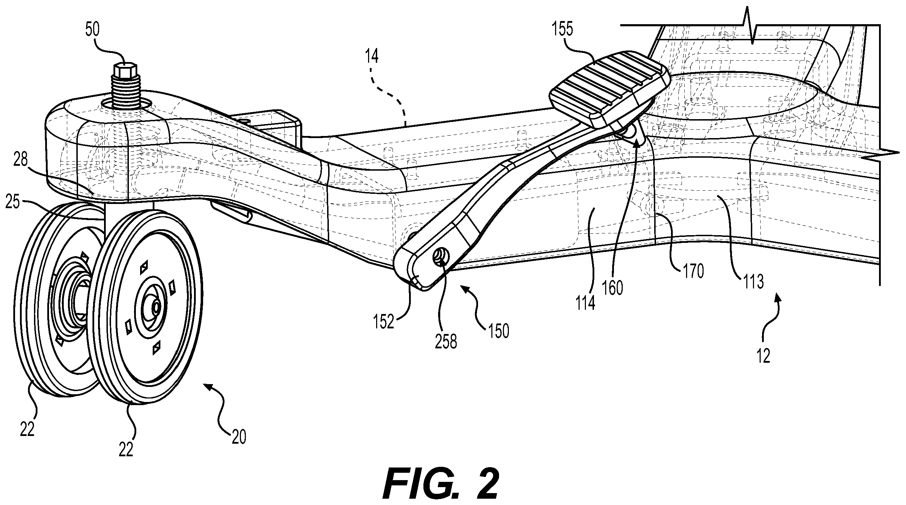

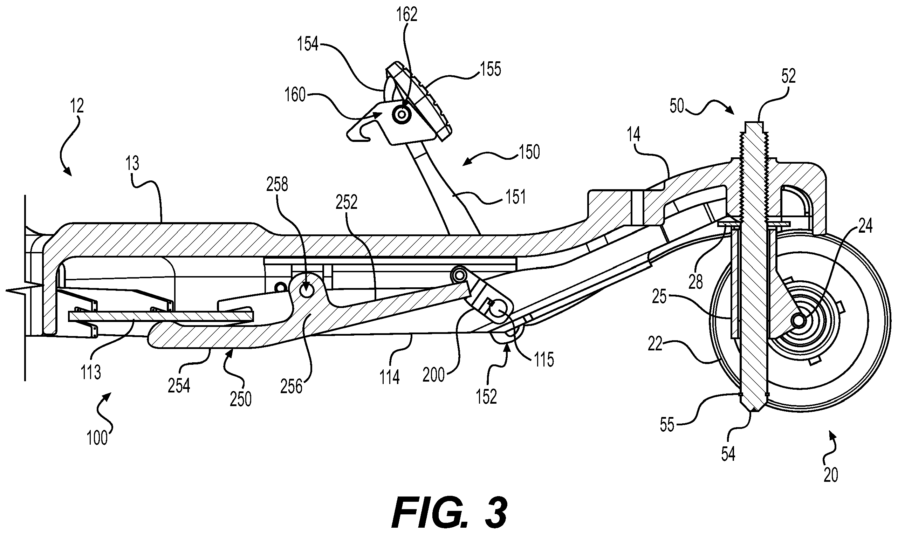

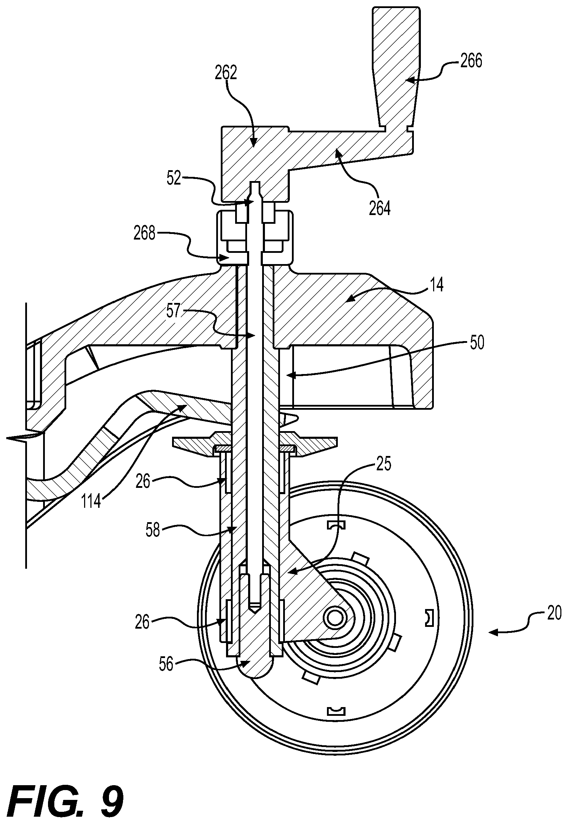

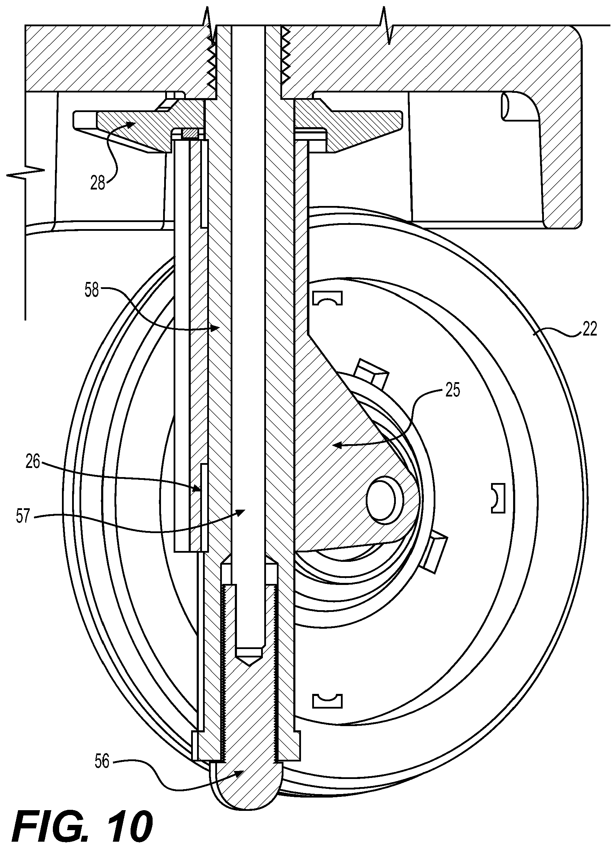

Referring to Figs. 2 and 3, each wheel assembly 20 of the embodiment shown includes one or more wheels, preferably a pair of spaced apart wheels 22, a carriage 25 positioned therebetween or therenext, and an axle 24 extending from the carriage to each wheel 22. The carriage 25 is slidably engaged with the trivet post 50 such that the wheel assembly 20 is moveable between a deployed configuration (shown in Fig. 9) and a stowed configuration (shown in Fig. 10). In the deployed configuration, the wheels 22 of the wheel assembly 20 are engaged with the floor such that the stand assembly 10 is movable along the floor. The wheel assembly is moveable from the deployed configuration to the stowed configuration by sliding the carriage 25 along the trivet post 50 until a distal end 54 of the trivet post engages with the floor, thereby moving the trivet post from a stowed configuration to a deployed configuration. In this way, movement of the wheel assembly 20 from its deployed configuration (as shown in Fig. 9) to its stowed configuration (as shown in Fig. 10) causes the trivet post 50 to simultaneously move from its stowed configuration to its deployed configuration.

In the embodiment shown, the stand assembly 10 is movable from a movable configuration to a stationary configuration by moving each of the wheel assemblies 20 from a respective deployed configuration to a respective stowed configuration. In some embodiments, the wheels 22 of the wheel assembly 20 remain engaged with the floor when the wheel assembly 20 is in its stowed configuration. In other embodiments, wheels 22 of at least some of the wheel assemblies 20 are displaced from the floor when the wheel assembly 20 is in its stowed configuration.

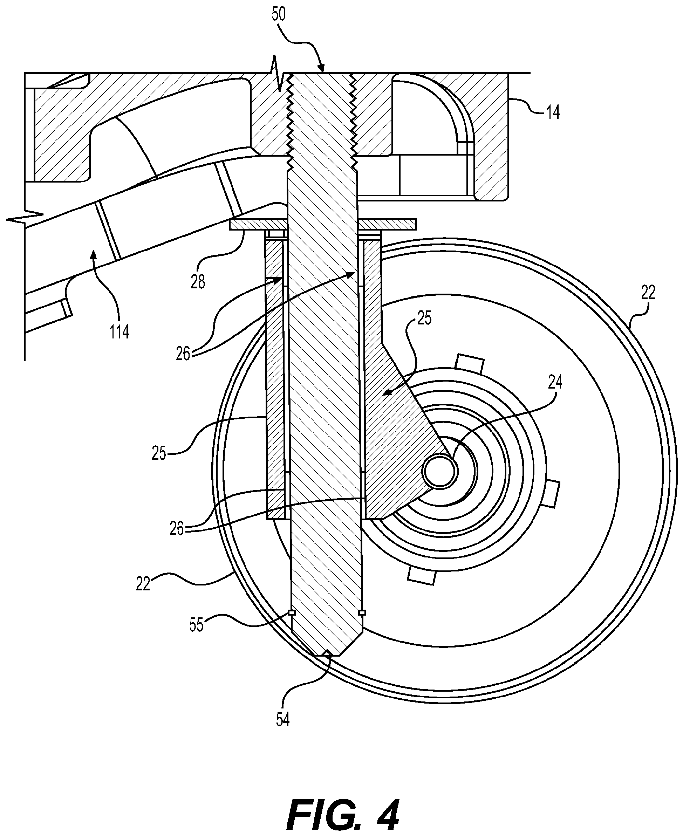

In the embodiment shown, the stand assembly 10 is movable from the stationary configuration to the moveable configuration by moving each of the trivet posts 50 from a respective deployed configuration to a respective stowed configuration. As shown in Fig. 4, the distal end 54 of each trivet post 50 is positioned within a diameter of a cylindrical void extending between the wheels 22 of the wheel assembly 20 when the trivet post 50 is in the stowed configuration, the diameter of the cylindrical void being the same as the outermost diameter of the wheels. In this way, ground clearance is maximized while minimizing travel of the trivet posts 50 and/or the wheel assemblies 20.

Referring back to Figs. 2 and 3, the embodiment shown includes a linkage assembly 100 for moving the wheel assemblies 20 towards their respective deployed configurations. In some embodiments, the linkage assembly 100 includes a center plate 113 and a plurality of linkage arms 114 extending from the center plate 113 towards a respective wheel assembly 20. In some embodiments, the center plate 113 is associated with the center hub 13 of the base 12, such as by being positioned within a void defined by the same. In some embodiments, each linkage arm 114 is associated with a respective base arm 14, such as by extending along a length of the same.

In the embodiment shown, each linkage arm 114 includes a proximal end engaged with the center plate 113, a center region pinned to a respective base arm 14 via a linkage pin 115, and a distal end engaged with a respective wheel assembly 20. In such embodiments, the linkage assembly is configured such that a vertical upward force applied to the center of the center plate 113 causes the proximal end of each linkage arm 114 to be biased upwards, thereby causing the distal end of each linkage arm 114 to be biased downwards. In this way, applying sufficient vertical upward force to the center plate 113 while the stand assembly 10 is in a stationary configuration will cause the wheel assemblies 20 to move towards their respective deployed configurations, thereby causing the stand assembly 10 to move towards its moveable configuration. Similarly, applying sufficient vertical upward force to the center plate 113 when the stand assembly 10 is in the movable configuration will prevent or otherwise inhibit the wheel assemblies 20 from moving away from their respective deployed configurations, thereby preventing or otherwise inhibiting the stand assembly 10 from moving away from its moveable configuration.

In some embodiments, one or more wheel assembly 20 includes an engagement plate 28, such as a washer or the like, for providing an engagement surface or other feature by which a load can be transferred from a respective linkage arm 114 into the wheel assembly 20. In some embodiments, the engagement plate 28 is positioned at or near a top end of the carriage 25. In some embodiments, at least one trivet post 50 extends through the distal end of a respective linkage arm 114 such that the linkage arm 114 applies loads to the wheel assembly 20 evenly on either side of the trivet post 50. In some embodiments, the distal end of the linkage arm 114 defines a curved edge, thereby facilitating proper engagement between the linkage arm 114 and the wheel assembly 20.

In some embodiments, one or more wheel assembly 20 includes one or more guide member 26, such as a bushing or the like, for facilitating movement of the carriage 25 along a length of the trivet post 50. In some embodiments, the wheel assembly 20 includes a first guide member 26 positioned at or near a first end of the carriage 25, such as at or near a top end of the wheel assembly 20, and a second guide member 26 displaced therefrom, such as at or near a second and/or bottom end of the carriage 25. In some embodiments, the carriage 25 defines one or more aperture through which the trivet post 50 extends. In some such embodiments, one or more guide member 26, such as, *e*.*g*., a bushing, is positioned within and/or defines at least part of the one or more aperture.

In some embodiments, one or more trivet post 50 extends through the base 12 and/or includes a proximal end 52 that is otherwise accessible, such as to facilitate adjustment of the trivet post 50. In some embodiments, one or more trivet post 50 includes a stop member 55, such as a retaining ring or the like, that is configured to prevent or otherwise inhibit a respective wheel assembly 20 from becoming disengaged from (*e.g*., slipping through) the trivet post 50. Referring to Fig. 4, the stop member 55 shown is positioned adjacent to the distal end of a trivet post and is configured to selectively interface with a guide member (*e*.*g*., bushing) 26 of the wheel assembly 20 in the event the wheel assembly 20 moves beyond the deployed configuration, such as if at least part of the stand assembly 10 is raised off of the floor such that gravity causes the carriage 25 to move towards the distal end of the trivet post 50. In some embodiments, the stop member 55 is removable or otherwise adjustable so as to facilitate removal of a respective wheel assembly 20, such as for replacing a damaged wheel assembly 20 and/or for changing wheel sizes.

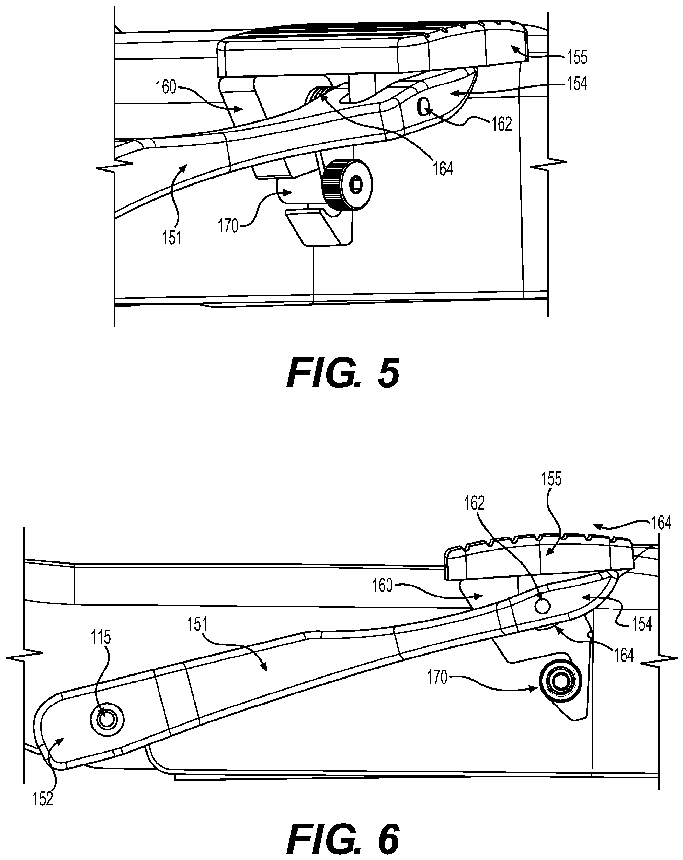

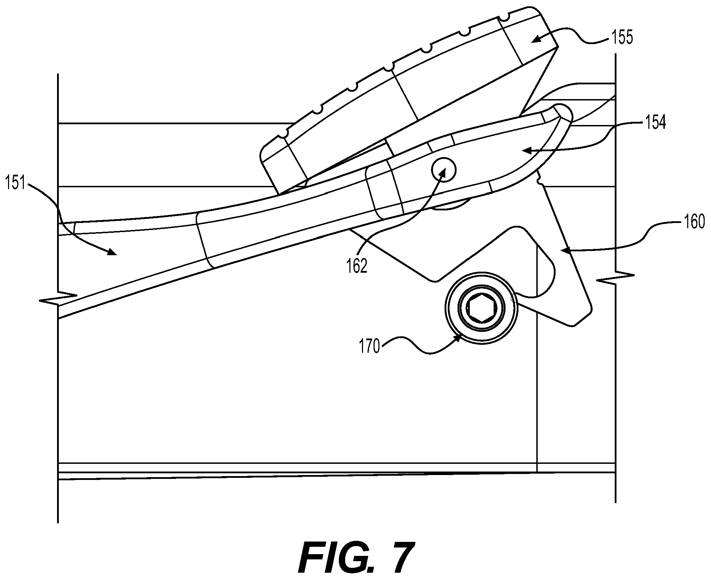

Turning again to Figs. 2 and 3, and now to Figs. 5-8, in some embodiments, the linkage assembly 100 includes a foot pedal assembly 150 for allowing a user to selectively move the stand assembly 10 from the stationary configuration to the movable configuration, such as by applying a downward force on the foot pedal assembly. In some embodiments, the foot pedal assembly 150 includes a pedal arm 151 having a proximal end 152 that is pinned to the base 12, such as via a center pin 115 or the like that functions as a fulcrum to a lever, and a distal end 154 displaced therefrom, thereby providing the user with a mechanical advantage for changing the configuration of the stand assembly 10.

In some embodiments, the linkage assembly includes a latch 160 or other means (such as a ratcheting mechanism or the like shown in U.S. Patent No. 16/112,299). In some embodiments, the latch 160 is configured to selectively engage with an engagement member 170, such as a pin or the like, thereby moving the latch assembly to an engaged configuration. In some embodiments, moving the latch assembly 160 to an engaged configuration while the stand assembly 10 is in the moveable configuration prevents the stand assembly 10 from moving away from the moveable configuration, thereby allowing the user to remove the downward (or other) force from the foot pedal assembly 150.

In some embodiments, the foot pedal assembly 150 includes a foot pad 155 or the like that is configured for facilitating user interaction with the linkage assembly 100. In some embodiments, the foot pad 155 is positioned at or near the distal end 154 of the pedal arm 151. In some embodiments, the foot pad is capable of being rocked about a pin 162 (*i*.*e*., a fulcrum) or otherwise moved relative to the pedal arm 151, such as to selectively engage with the latch assembly 160, as shown in Figs. 6-7. In some embodiments, selectively rocking the foot pad 155 about the pin 162, clockwise to latch, counterclockwise to unlatch, allows the user to move the latch assembly 160 from the engaged configuration to a disengaged configuration, thereby allowing the stand assembly 10 to move away from the moveable configuration. In some embodiments, the latch assembly 160 is biased towards the engaged configuration. In some embodiments, the foot pad 155 or one or more other feature of the linkage assembly 100 is configured to provide the user with a mechanical advantage for moving the latch assembly 160 away from the engaged configuration. In one embodiment, the mechanical advantage is a spring member 164.

Turning to Fig. 3, in some embodiments, the linkage assembly 100 includes a cam assembly 200 coupled to the foot pedal assembly 150 such that movement of the foot pedal assembly 150 results in a corresponding movement of the cam assembly 200. In some embodiments, the cam assembly 200 engages with a first portion 252 of a rocker arm 250, such as a distal end of the same. Here, the proximal end of the first portion 252 of the rocker arm 250 is proximate to the pin 258 fulcrum. In some embodiments, the rocker arm 250 further includes a second portion 254 having a distal end positioned below a center portion of the center plate 113 (here the proximal end is near the fulcrum) and a third portion 256 rotatably pinned to the base 12, the first 252 and second 254 portions extending from opposed sides of the third portion 256, which is proximate to the pin 258. In this way, the linkage assembly 100 provides a mechanical advantage for allowing a user to apply an upward force onto the center plate 113.

Thus, in some embodiments, the mechanism for lifting the base arms 14 and enabling the stand assembly 10 to travel employs a foot pad 155 attached by way of a pin 162 to a pedal arm 151 associated to at least one of the base arms 14 that affects a rocker arm 250 to raise or lower the center plate 113, which, when pressed, transfers motion upward through the center plate 113 to simultaneously lower all of the casters 22s. In some embodiments, the foot pad 155 has a single foot pad design, which, when pressed down, it lowers the casters. In one embodiment, a spring 164 loaded latch 160 opens and springs back to latch onto the post 170. To release the foot pedal 155, the user steps down on the pedal 155, rocks the pedal 155 "back" to push the latch 160 forward and slowly allows the weight of the stand assembly 10 to raise the pedal 155 past the latch post 170.

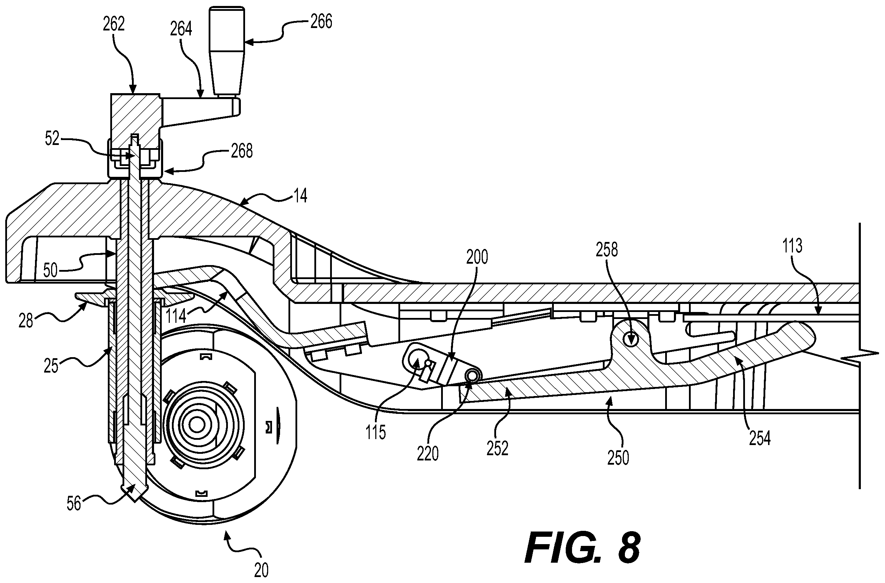

Turning to Figs. 8-10, in some embodiments, the stand assembly 10 of the present invention includes a plurality of leveling assemblies 260, each one associated with a wheel assembly 20 and located at the proximal end 52 of each trivet post 50. In some embodiments, each leveling assembly 260 includes a crank 262 and a jam nut 268, and the trivet post 50 includes a trivet post outer sleeve 58 and a trivet post inner member 57. In some embodiments, each leveling assembly also includes a crank lever 264 and, optionally, a crank handle 266. In one embodiment, by turning the crank handle 266 at the top of each trivet post foot 52, torque is transmitted through the trivet post inner member 57 to the ball nose trivet post 56 and each leg 14 of the stand can be raised or lowered a measure, such as, e.g., approximately 0,3175 cm to 5,08 cm (1/8 to 2 inches). This gives the user the ability to level the stand 10 from a slightly unlevel environment. A jam nut 266 directly underneath the crank 262 provides a way to lock the trivet post 50 to the adjusted height. Here, the trivet post outer sleeve 58 moves through the bushing 26 and carriage 25 of the wheel assembly 20 during engagement and disengagement of the wheels 22.

In the foregoing description, certain terms have been used for brevity, clearness and understanding; but no unnecessary limitations are to be implied therefrom beyond the requirements of the prior art, because such terms are used for descriptive purposes and are intended to be broadly construed. Moreover, the description and illustration of the inventions is by way of example, and the scope of the inventions is not limited to the exact details shown or described.

Although the foregoing detailed description of the present invention has been described by reference to an exemplary embodiment, and the best mode contemplated for carrying out the present invention has been shown and described, it will be understood that certain changes, modification or variations may be made in embodying the invention as defined by the claims. Consequently, the scope of the present invention is intended to be limited only by the attached claims, all matter contained in the above description and shown in the accompanying drawings shall be interpreted as illustrative and not in a limiting sense.

Having now described the features, discoveries and principles of the invention, the manner in which the invention is constructed and used, the characteristics of the construction, and advantageous, new and useful results obtained; the new and useful structures, devices, elements, arrangements, parts and combinations, are set forth in the appended claims.

## Claims

1. A stand assembly comprising:
a vertical stanchion (15);
a base (12) comprising a center hub (13) coaxially positioned at a proximal end of the vertical stanchion;
a plurality of wheel assemblies (20) moveably fixed to the base;
a moveable trivet comprising a plurality of trivet posts (50),
the trivet being associated with each of the plurality of wheel assemblies; and
a linkage assembly (100) comprising a plurality of linkage arms (114), each linkage arm being associated with a respective wheel assembly,
**characterized in that** each wheel assembly (20) is moveable along a respective trivet post (50) such that:
a distal end (54) of each trivet post engages with the floor when the trivet posts are in a deployed configuration, and
the distal end (54) of each trivet post is positioned within a diameter of wheels (22) of its respective wheel assembly when the trivet post is in a stowed configuration.

2. The stand assembly of claim 1, wherein the base comprises a plurality of base arms (14), each base arm being associated with a respective wheel assembly of the plurality of wheel assemblies, a proximal end of each base arm contacts the center hub, and a respective wheel assembly is positioned at a distal end of each base arm.

3. The stand assembly of claim 2, further comprising a brace member (17) having a first end and a second end, wherein the first end of the brace member is fixed to the vertical stanchion at a position proximate to a distal end of the vertical stanchion, and the second end of the brace member is fixed to a base arm at a position proximate to the distal end of the base arm.

4. The stand assembly of claim 1, wherein each wheel assembly comprises an axle (24), a carriage (25), and an engagement plate (28), wherein the trivet post is located coaxially within the carriage, and wherein the engagement plate is located at a top of the carriage.

5. The stand assembly of claim 4, wherein each wheel assembly comprises a bushing (26) located coaxially within the carriage and surrounding the corresponding trivet post.

6. The stand assembly of claim 4, wherein the linkage assembly comprises a center plate (113) associated with the center hub of the base, wherein a proximal end of each linkage arm is engaged with the center plate, wherein a middle portion of each linkage arm is rotatably fixed to a respective base arm with a linkage pin, and wherein a distal end of each linkage arm is configured to contact the engagement plate of a respective wheel assembly.

7. The stand assembly of claim 6, wherein the linkage assembly further comprises a foot pedal assembly (150) having a pedal arm (151) extending from one of the plurality of base arms.

8. The stand assembly of claim 7, wherein the linkage assembly further comprises a cam assembly (200) and a rocker arm (250), wherein the pedal arm is rotatably fixed to the cam assembly, wherein the cam assembly contacts a first portion (252) of the rocker arm with a cam follower, and wherein a second portion of the rocker arm contacts the center plate.

9. The stand assembly of claim 8, wherein the foot pedal assembly further comprises a foot pad (155) rotatably connected to the foot pedal arm with a pedal pin (162), a spring (164) coaxially associated with the pedal pin, a catch member fixed to the base arm, and a latch assembly (160) fixed to the foot pad and configured to engage with the catch member.

10. The stand assembly of claim 1, further comprising a leveling assembly (260) associated with at least two wheel assemblies and contacting corresponding trivet posts.

11. The stand assembly of claim 10, wherein the leveling assembly comprises a crank (262) contacting a top of a first trivet post of the plurality of trivet posts, a crank lever (264) attached to the crank, and a crank handle (266) attached to the crank lever.

12. The stand assembly of claim 11, wherein the leveling assembly further comprises a jam nut (268) located proximate to the top of the first trivet post.

13. The stand assembly of claim 1, wherein each wheel assembly comprises a carriage slidably engaged with a corresponding trivet post (50).

14. The stand assembly of claim 13, wherein first and second ends of each carriage defines respective first and second apertures, and wherein each trivet post (50) extends coaxially through the first and second apertures of its respective carriage.

15. A method of moving a stand assembly as defined in any of claims 1 to 14 from a stationary configuration to a moveable configuration, the method comprising:
moving a wheel relative to the respective trivet post (50), such that the trivet post (50) disengages from a horizontal surface and the wheel can freely rotate along the horizontal surface.

## Patentansprüche

1. Eine Standanordnung, umfassend:
eine vertikale Stütze (15);
eine Basis (12) mit einer zentralen Nabe (13), die koaxial an einem proximalen Ende der vertikalen Stütze angeordnet ist;
mehrere Radbaugruppen (20), die beweglich an der Basis befestigt sind;
ein bewegliches Untergestell, das mehrere Untergestellpfosten (50) umfasst, wobei das Untergestell jeder der mehreren Radbaugruppen zugeordnet ist; und
eine Gestängeanordnung (100), die mehrere Gestängearme (114) umfasst, wobei jeder Gestängearm einer jeweiligen Radbaugruppe zugeordnet ist,
**dadurch gekennzeichnet, dass** jede Radbaugruppe (20) entlang eines jeweiligen Untergestellpfostens (50) beweglich ist, sodass:
ein distales Ende (54) jedes Untergestellpfostens mit dem Boden in Eingriff steht, wenn sich die Untergestellpfosten in einer ausgefahrenen Position befinden, und das distale Ende (54) jedes Untergestellpfostens innerhalb eines Durchmessers der Räder (22) seiner jeweiligen Radbaugruppe positioniert ist, wenn sich der Untergestellpfosten in einer verstauten Position befindet.

2. Die Standanordnung nach Anspruch 1, wobei die Basis mehrere Basisarme (14) umfasst, wobei jeder Basisarm einer jeweiligen Radbaugruppe der mehreren Radbaugruppen zugeordnet ist, ein proximales Ende jedes Basisarms die zentrale Nabe berührt und eine jeweilige Radbaugruppe an einem distalen Ende jedes Basisarms positioniert ist.

3. Die Standanordnung nach Anspruch 2, die ferner ein Strebenelement (17) mit einem ersten Ende und einem zweiten Ende umfasst, wobei das erste Ende des Strebenelements an einer Stelle nahe dem distalen Ende der vertikalen Stütze an dieser befestigt ist und das zweite Ende des Strebenelements an einer Stelle nahe dem distalen Ende eines Basisarms an diesem befestigt ist.

4. Die Standanordnung nach Anspruch 1, wobei jede Radbaugruppe eine Achse (24), einen Schlitten (25) und eine Eingriffsplatte (28) umfasst, wobei sich der Untergestellpfosten koaxial innerhalb des Schlittens befindet und wobei sich die Eingriffsplatte an der Oberseite des Schlittens befindet.

5. Die Standanordnung nach Anspruch 4, wobei jede Radbaugruppe eine Buchse (26) umfasst, die koaxial innerhalb des Schlittens angeordnet ist und den entsprechenden Untergestellpfosten umgibt.

6. Die Standanordnung nach Anspruch 4, wobei die Gestängeanordnung eine mit der zentralen Nabe des Sockels verbundene Mittelplatte (113) umfasst, wobei ein proximales Ende jedes Gestängearms mit der Mittelplatte in Eingriff steht, wobei ein mittlerer Abschnitt jedes Gestängearms mittels eines Gestängebolzens drehbar an einem jeweiligen Basisarm befestigt ist und wobei ein distales Ende jedes Gestängearms so ausgebildet ist, dass es die Eingriffsplatte einer jeweiligen Radbaugruppe berührt.

7. Die Standanordnung nach Anspruch 6, wobei die Gestängeanordnung ferner eine Fußpedalanordnung (150) umfasst, die einen Pedalarm (151) aufweist, der sich von einem der mehreren Basisarme erstreckt.

8. Die Standanordnung nach Anspruch 7, wobei die Gestängeanordnung ferner eine Nockenbaugruppe (200) und einen Kipphebel (250) umfasst, wobei der Pedalarm drehbar an der Nockenbaugruppe befestigt ist, wobei die Nockenbaugruppe mit einem Nockenfolger einen ersten Abschnitt (252) des Kipphebels berührt und wobei ein zweiter Abschnitt des Kipphebels die Mittelplatte berührt.

9. Die Standanordnung nach Anspruch 8, wobei die Pedalbaugruppe ferner eine Fußauflage (155) umfasst, die über einen Pedalbolzen (162) drehbar mit dem Fußpedalarm verbunden ist, sowie eine koaxial zum Pedalbolzen angeordnete Feder (164), ein am Basisarm befestigtes Rastelement sowie eine an der Fußauflage befestigte und so ausgebildete Verriegelungsbaugruppe (160), dass sie mit dem Rastelement in Eingriff kommt.

10. Die Standanordnung nach Anspruch 1, die ferner eine Nivellierbaugruppe (260) umfasst, die mit mindestens zwei Radbaugruppen verbunden ist und mit entsprechenden Untergestellpfosten in Kontakt steht.

11. Die Standanordnung nach Anspruch 10, wobei die Nivellierbaugruppe eine Kurbel (262), die mit einer Oberseite eines ersten der mehreren Untergestellpfosten in Kontakt steht, einen an der Kurbel befestigten Kurbelhebel (264) und einen an dem Kurbelhebel befestigten Kurbelgriff (266) umfasst.

12. Die Standanordnung nach Anspruch 11, wobei die Nivellierbaugruppe ferner eine Kontermutter (268) umfasst, die sich in der Nähe der Oberseite des ersten Untergestellpfostens befindet.

13. Die Standanordnung nach Anspruch 1, wobei jede Radbaugruppe einen Schlitten umfasst, der verschiebbar mit einem entsprechenden Untergestellpfosten (50) in Eingriff steht.

14. Die Standanordnung nach Anspruch 13, wobei das erste und das zweite Ende jedes Schlittens jeweils eine erste bzw. zweite Öffnung bilden und wobei sich jeder Untergestellpfosten (50) koaxial durch die erste und die zweite Öffnung seines jeweiligen Schlittens erstreckt.

15. Verfahren zum Bewegen einer Standanordnung gemäß einem der Ansprüche 1 bis 14 aus einer stationären Konfiguration in eine bewegliche Konfiguration, wobei das Verfahren umfasst:
das Bewegen eines Rades relativ zu dem jeweiligen Untergestellpfosten (50), derart, dass sich der Untergestellpfosten (50) von einer horizontalen Fläche löst und sich das Rad frei entlang der horizontalen Fläche drehen kann.

## Revendications

1. Ensemble de support comprenant :
un montant vertical (15) ;
une base (12) comprenant un corps central (13) positionné coaxialement à une extrémité proximale du montant vertical ;
une pluralité d'ensembles de roues (20) fixés de manière mobile à la base ;
un piètement mobile comprenant une pluralité de pieds (50), le piètement étant associé à chacun des ensembles de roues ; et
un ensemble de liaison (100) comprenant une pluralité de bras de liaison (114), chaque bras de liaison étant associé à un ensemble de roues respectif,
**caractérisé en ce que** chaque ensemble de roues (20) est mobile le long d'un pied respectif (50), de telle sorte que :
une extrémité distale (54) de chaque pied vient en prise avec le sol lorsque les pieds sont dans une configuration déployée ; et
l'extrémité distale (54) de chaque pied est positionnée à l'intérieur du diamètre des roues (22) de son ensemble de roues respectif lorsque le pied est dans une configuration repliée.

2. Ensemble de support selon la revendication 1, dans lequel la base comprend une pluralité de bras de base (14), chaque bras de base étant associé à un ensemble de roues respectif de la pluralité d'ensembles de roues, une extrémité proximale de chaque bras de base étant en contact avec le corps central, et un ensemble de roues respectif étant positionné à une extrémité distale de chaque bras de base.

3. Ensemble de support selon la revendication 2, comprenant en outre un élément de renfort (17) ayant une première extrémité et une deuxième extrémité, dans lequel la première extrémité de l'élément de renfort est fixée au montant vertical à une position proche d'une extrémité distale du montant vertical, et la deuxième extrémité de l'élément de renfort est fixée à un bras de base à une position proche de l'extrémité distale du bras de base.

4. Ensemble de support selon la revendication 1, dans lequel chaque ensemble de roues comprend un essieu (24), un chariot (25) et une plaque d'engagement (28), dans lequel le pied est logé coaxialement dans le chariot, et dans lequel la plaque d'engagement est située au sommet du chariot.

5. Ensemble de support selon la revendication 4, dans lequel chaque ensemble de roues comprend une douille (26) située coaxialement dans le chariot et entourant le pied correspondant.

6. Ensemble de support selon la revendication 4, dans lequel l'ensemble de liaison comprend une plaque centrale (113) associée au corps central de la base, dans lequel une extrémité proximale de chaque bras de liaison est engagée avec la plaque centrale, dans lequel une partie médiane de chaque bras de liaison est fixée de manière rotative à un bras de base respectif à l'aide d'un axe de liaison, et dans lequel une extrémité distale de chaque bras de liaison est configurée pour entrer en contact avec la plaque d'engagement d'un ensemble de roues respectif.

7. Ensemble de support selon la revendication 6, dans lequel l'ensemble de liaison comprend en outre un ensemble de pédale (150) ayant un bras de pédale (151) s'étendant à partir d'un bras de la pluralité de bras de base.

8. Ensemble de support selon la revendication 7, dans lequel l'ensemble de liaison comprend en outre un ensemble à came (200) et un bras oscillant (250), dans lequel le bras de pédale est fixé de manière rotative à l'ensemble à came, dans lequel l'ensemble à came est en contact avec une première partie (252) du bras oscillant au moyen d'un suiveur de came, et dans lequel une deuxième partie du bras oscillant est en contact avec la plaque centrale.

9. Ensemble de support selon la revendication 8, dans lequel l'ensemble de pédale comprend en outre un patin (155) relié de manière rotative au bras de pédale par un axe de pédale (162), un ressort (164) associé coaxialement à l'axe de pédale, un organe de retenue fixé au bras de base, et un ensemble de verrouillage (160) fixé au patin et configuré pour venir en prise avec l'organe de retenue.

10. Ensemble de support selon la revendication 1, comprenant en outre un ensemble de mise à niveau (260) associé à au moins deux ensembles de roues et en contact avec les pieds correspondants.

11. Ensemble de support selon la revendication 10, dans lequel l'ensemble de mise à niveau comprend une manivelle (262) en contact avec un sommet d'un premier pied de la pluralité de pieds, un levier de manivelle (264) fixé à la manivelle, et une poignée de manivelle (266) fixée au levier de manivelle.

12. Ensemble de support selon la revendication 11, dans lequel l'ensemble de mise à niveau comprend en outre un contre-écrou (268) situé à proximité du sommet du premier pied.

13. Ensemble de support selon la revendication 1, dans lequel chaque ensemble de roues comprend un chariot engagé de manière coulissante avec un pied (50) correspondant.

14. Ensemble de support selon la revendication 13, dans lequel les première et deuxième extrémités de chaque chariot définissent respectivement une première ouverture et une deuxième ouverture, et dans lequel chaque pied (50) s'étend coaxialement à travers les première et deuxième ouvertures de son chariot respectif.

15. Procédé de déplacement d'un ensemble de support tel que défini dans l'une quelconque des revendications 1 à 14 d'une configuration stationnaire vers une configuration mobile, le procédé comprenant :
déplacer une roue par rapport au pied (50) respectif, de sorte que le pied (50) se désengage d'une surface horizontale et que la roue puisse tourner librement sur la surface horizontale.
